# EUROPEAN PATENT APPLICATION

(11) **EP 3 821 702 A1**
(43) Date of publication of application: **19.05.2021**
(21) Application number: 20206875.5
(22) Date of filing: 11.11.2020
(51) Int. Cl.: A01G 31/02, A01C 1/02

(54) **TRAY FOR SPROUTER**

(30) Priority: 12.11.2019 IT 201900020958
(71) Applicant: IGEA PRO SRL, 06132 Perugia (PG) (IT)
(72) Inventor: FUMI, Fabio, 06132 Perugia (PG) (IT)
(74) Representative: Ercolani, Simone Pietro

(57) **Abstract**

Tray (1) for sprouter (100) comprising a bottom wall (2) provided with at least one through opening (3) mainly extending along a longitudinal axis (X) and having transversal dimensions (Y) such as to prevent the seeds (50) laid on said tray from going through said at least one through opening (3), characterized in that said at least one opening (3) is defined, at least on top and in direction of said longitudinal axis, by two opposite upper side surfaces (2a, 2b) of said bottom wall (2) which, in cross section, are substantially "V" shaped so that the seeds laid on said tray (1) can lean on said two opposite upper side surfaces (2a, 2b),wherein said at least one opening (3) is defined, at least at the bottom and in direction of said at least one longitudinal axis, by two opposite lower side surfaces (2c, 2d) of said bottom wall (2) that, in cross section, are substantially "inverted-V" shaped, said two opposite lower side surfaces (2c, 2d) being connected to said two opposite upper side surfaces (2a, 2b), wherein the respective connecting portions (60) between said two opposite lower side surfaces (2c, 2d) and said two opposite upper side surfaces (2a, 2b) are curvilinear.

## Description

The present invention concerns a tray for sprouter fitted for the domestic cultivation of sprouts. Vegetable food products adapted for growing in sprouters of the known art are chickpeas, beans, soy, rocket, valerian and others.

Trays for sprouter are known, used to support plant seeds until they sprout and can be harvested.

For example, the Italian patent UD2004A000028 in the name of Baviccchi Spa describes a sprouter provided with at least two stackable trays. Each tray comprises a bottom wall provided with a plurality of through openings apt to allow the draining of water and, simultaneously, having transversal dimensions such as to keep the sprout seeds leaned until they are ripe for harvesting.

In particular, the tray described in the Bavicchi's Patent has perfectly flat surfaces for leaning the seed. In practice, the portion of the bottom wall arranged on the two sides of each single opening is flat and supports the seed, this way, however, the contact surface of the seed is one and therefore rather limited, thus reducing the contact interface between the wall and seed and, thus, the exchange between the seeds and water.

Moreover, each opening obtained in the tray has an inverted "V" section which favors the passage of water on one hand and makes it difficult to extract the sprout once it is ready to be harvested on the other. In fact, at the top of the passage, there are two sharp edges opposite each other which cause the root of the sprout to break when the latter is extracted. In fact, while the sprout grows and develops above the flat seed-leaning surface, the root tends to stay caught under such leaning surface of the bottom wall, between the two sharp edges of the inverted "V". This way, when the sprout is pulled upwards, during harvest, the root is torn from rest of the sprout and stays caught under the leaning surface, between the two sharp edges. This makes it much more difficult to clean the tray itself since the user must remove the roots that remained on the tray one by one.

The documents JP S5995854 and CN 1054167 describe supporting elements for "V" shaped seeds to accelerate their sprouting.

Thus, object of the present invention is to implement a tray for sprouter that allows a faster sprout growing process.

Further object of the present invention is to implement a tray that prevents the roots from breaking when the sprout is extracted from the tray, thus facilitating its extraction.

Finally, object of the present invention is to implement a tray that is more simple and faster to clean.

These and further objects are achieved by a tray for sprouter comprising a bottom wall provided with at least one through opening mainly extending along a longitudinal axis and having transversal dimensions such as to prevent the seeds laid on said tray from going through said at least one through opening, characterized in that said at least one opening is defined, at least on top and in direction of said longitudinal axis, by two opposite upper side surfaces of said bottom wall which, in cross section, are substantially "V" shaped so that the seeds, also of different dimensions, laid on said tray can lean on said two opposite upper side surfaces.

Such solution allows to increase the contact surface between the seeds and the bottom wall and, thus, a more correct and intense exchange with water, as well as a faster sprouting process.

Henceforth, it should be observed that the adjective "upper" or "lower" related to one or more technical elements is to be considered with the tray installed in the sprouter. In practice, when the tray is installed, the seeds will lean on the "upper" surface of the bottom wall and will thus be leaning, as mentioned above, on the two opposite upper side surfaces of the bottom wall that, in cross section, are substantially "V" shaped and define part of a through opening.

Moreover, said at least one opening is defined, at least at the bottom and in direction of said at least one longitudinal axis, by two opposite lower side surfaces of said bottom wall that, in cross section, are substantially "inverted-V" shaped; said two opposite lower side surfaces are connected to said two opposite upper side surfaces. Said two opposite lower side surfaces and said two opposite upper side surfaces, together with the connecting surfaces, whenever present, define the through opening.

In practice, while the root of the sprout is under the two opposite upper surfaces, the root of the sprouts is at the two opposite lower surfaces, just below the connecting zone between the two opposite lower surfaces and the two opposite upper surfaces. Such configuration of the opening prevents the root from being torn from the rest of the sprout when the user harvests the sprout.

This way, it is no longer necessary to remove the torn roots from the tray, thus significantly simplifying not only the extraction of the sprouts during harvest, but also the cleaning of the tray. Moreover, this allows to keep all the nutritional characteristics of the sprout intact and which would in part be lost from the moment the root is severed therefrom.

In particular, the angle of inclination of each opposite upper side surface is between 10 and 45°, preferably 30°, with respect to a vertical plane.

Still, the angle of inclination of each opposite lower side surface is between 10 and 45°, preferably 30°, with respect to a vertical plane.

Always according to the invention, the upper surface of said bottom wall has, at two sides of said at least one through opening, a jutting portion extending in direction of said longitudinal axis X and is arranged in the proximity of the respective opposite upper surface. Preferably, in cross-section, such jutting portion is triangular in shape.

The presence of the jutting portions prevents the seed, in the proximity of the opening, from remaining outside of the opening itself, when leaning on any flat surface of the bottom wall.

Still, said longitudinal axis of said at least one opening is curvilinear, preferably at least partially circular.

Preferably, said tray is made of plastic.

Furthermore, said tray is made by injection molding.

Still, the distance in cross direction of each opening, in the minimum point, is less than 8 mm, advantageously less than 5 mm and preferably less than 1 mm. It should be observed that such distance in the minimum point is measured from the connecting portions between the two opposite lower side surfaces and the two opposite upper side surfaces.

Advantageously, according to a further embodiment of the invention, the respective connecting portions between said two opposite lower side surfaces and the two opposite upper side surfaces are curvilinear. This favors even more the extraction of the sprouts from the tray without getting the roots caught at the tray.

Finally, a sprouter comprising one or more trays according to one or more of claims 1 to 10 is provided.

Some particular embodiments of the present invention will now be described by way of example only and without limitations with respect to the accompanying figures, in which:
figure 1 is a simplified axonometric view of a sprouter according to the invention;

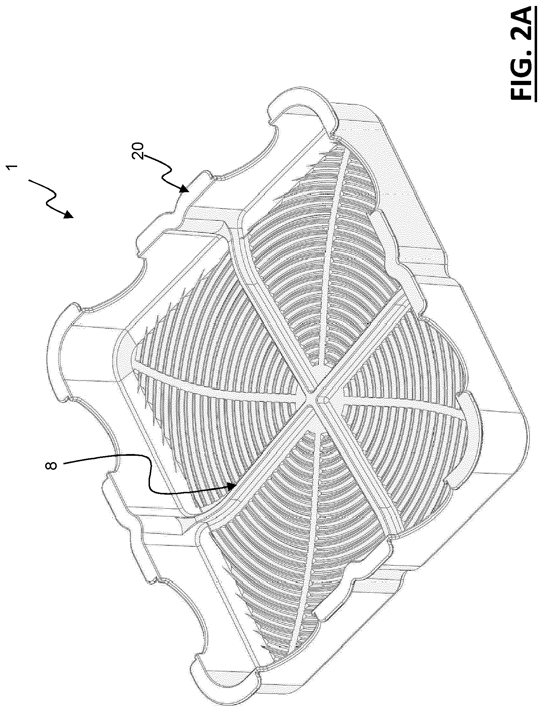

figure 2A is a top axonometric view of the tray according to the invention;

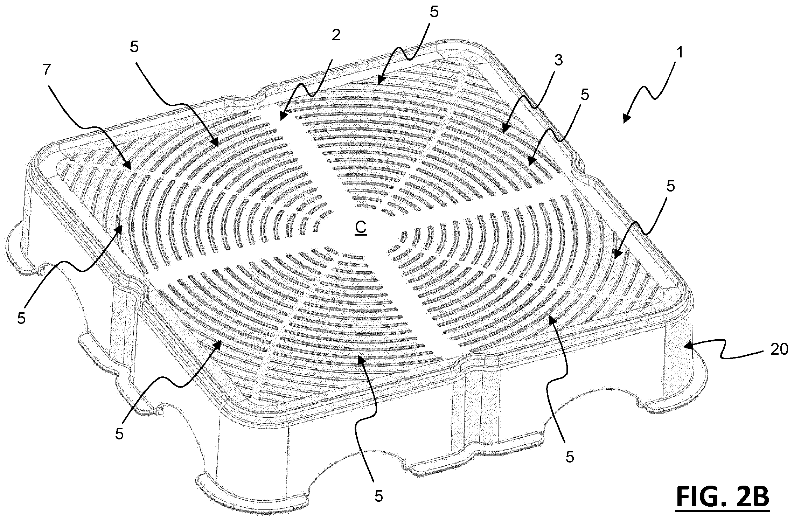

figure 2B is a bottom axonometric view of the tray according to the invention;

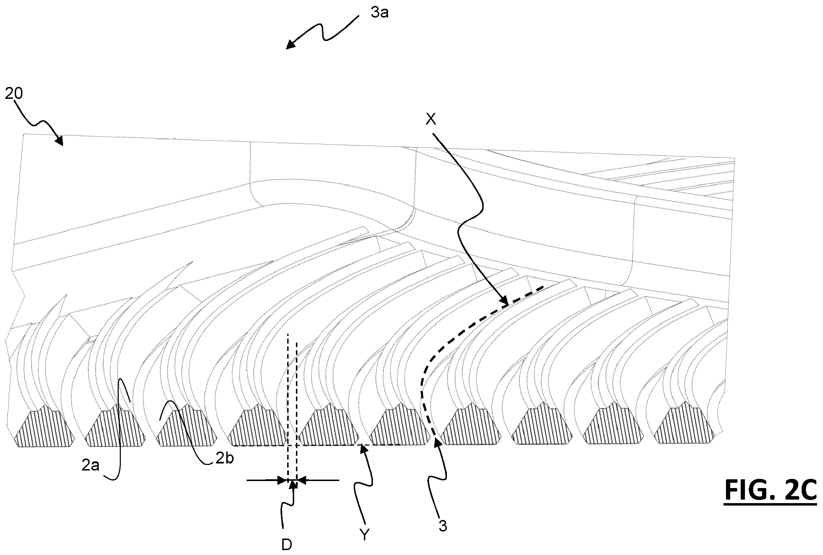

figure 2c is an axonometric view of a cross section of the tray of figure 2A or 2B;
figure 2D is a particular view of the section of figure 2C;
figure 3 is a view of a cross section of the tray, according to a further embodiment of the invention.

With particular reference to such figures, 1 denotes the generic tray for sprouter according to the invention.

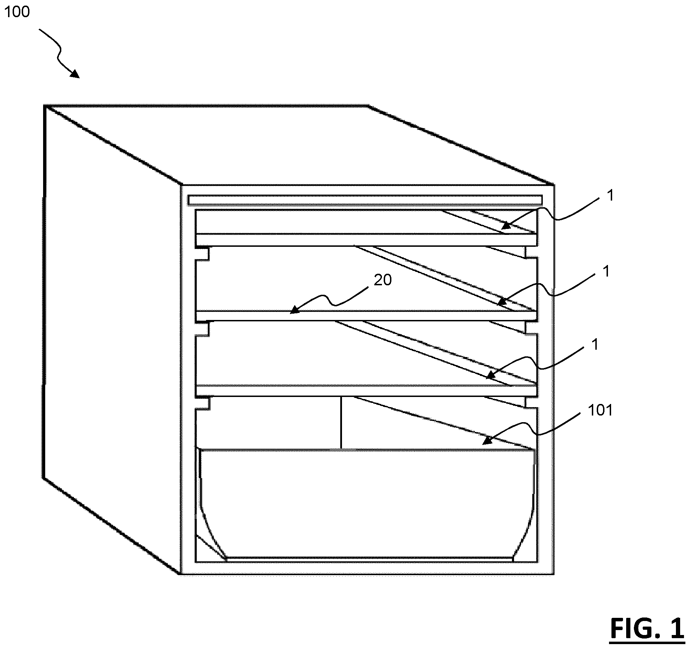

A sprouter 100 comprising three trays 1 combined with the sprouter 100 at different heights is shown in a simplified way in figure 1. Above the sprouter 100, means for irrigating the seeds arranged on the trays 1 (not shown in figure, but known to the technician of the field) are usually present, whereas there is a collection tank 101 under the sprouter 100 for collecting the water used to irrigate the seeds 50 arranged on the trays 1.

Each tray 1 for sprouter 100 comprises a bottom wall 2 provided with a plurality of through openings 3 mainly extending along a longitudinal axis X and having transversal dimensions Y such as to prevent the seeds 50 laid on the tray 1 from going through the through openings 3. The tray 1 is substantially quadrangular and also has four retaining walls 20 arranged above the bottom wall 2.

The tray is made of plastic, preferably by injection molding.

The aforementioned openings 3 have a curvilinear longitudinal axis X. In the embodiment shown herein, the longitudinal axis X follows a partially circular path. The openings 3 are arranged into eight sectors 5 separated by ribbing 7 and/or reinforcing septa 8 which meet at the center C of the tray 1. Moreover, in each sector 5, the through openings 3 are distributed concentrically among each other and at identical distances. The final shape of the bottom wall 2 is thus that of a grid, wherein each opening 3 is followed by a portion of the bottom wall 2.

Advantageously, according to the invention, each opening 3 is defined, at least on top and in direction of the longitudinal axis X, by two opposite upper side surfaces 2a and 2b of the bottom wall 2 which, in cross section, are substantially "V" shaped, so that the seeds laid on the tray 1 can lean on the two opposite upper side surfaces 2a and 2b.

Such solution allows to increase the contact surface between the seeds and the bottom wall 2 and thus allows to achieve a more correct and intense exchange between the seeds and water. This also improves the stability of the seed whenever the sprouter 100 is moved from a position or is subjected to undesired vibrations.

Always according to the invention, each opening 3 is defined, at least at the bottom and in direction of the longitudinal axis X, by two opposite lower side surfaces 2c and 2d of the bottom wall 2 that, in cross section, are substantially "inverted-V" shaped. Such two opposite lower side surfaces 2c and 2d are connected to the two opposite upper side surfaces 2a and 2b.

Thus, the final shape of the opening, in a cross section at the longitudinal axis X, resembles that of a convergent-divergent in which, at the connecting point, the minimum distance D of the through opening 3 is obtained.

In practice, while sprouts are above the two opposite upper surfaces 2a, 2b, the root of the sprouts is at the two opposite lower surfaces 2c, 2d, just below the connecting zone between the two opposite lower surfaces 2c, 2d and the two opposite upper surfaces 2a, 2b. Such configuration of the opening 3 prevents the roots from being torn from the rest of the sprout when the user harvests the sprouts.

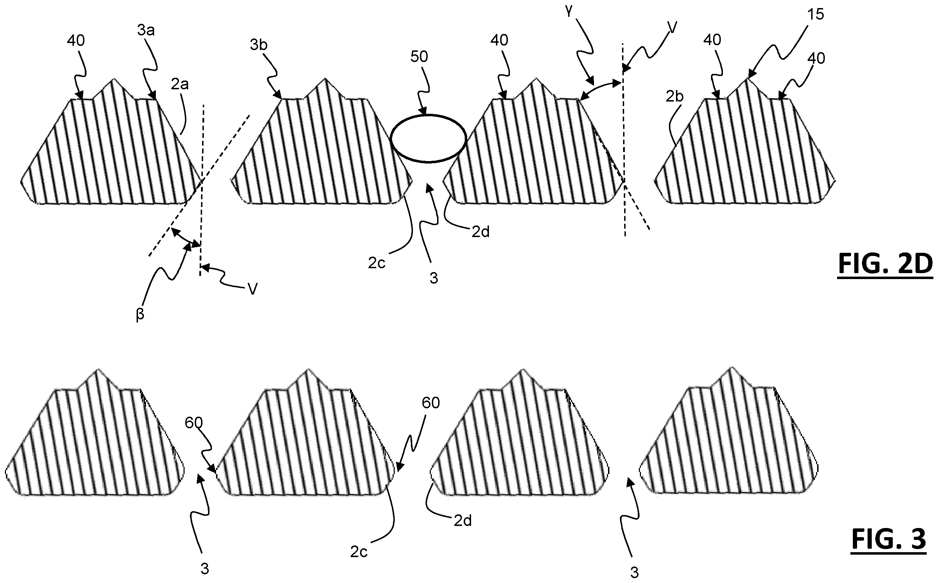

In further embodiments, the final shape of such cross section can also be rounder than that shown in the accompanying figures, especially at the connecting zone between the two opposite lower side surfaces 2c, 2d and the two opposite upper side surfaces 2a, 2b (see figure 3).

In particular, the angle γ of inclination of each opposite upper side surface 2a, 2b is of 30° with respect to a vertical plane V, however, in other embodiments not shown herein, such angle γ of inclination is between 10 and 45°, without thereby departing from the protection scope of the present invention.

Still, the angle β of inclination of each opposite lower side surface 2c, 2d is of 30° with respect to the aforementioned vertical plane V, however, in further other embodiments not shown herein such angle β of inclination is between 10 and 45°, without thereby departing from the protection scope of the present invention.

Still, the upper surface 40 of the bottom wall 2 has, at two sides 3a, 3b of each through opening 3, a jutting portion 15 extending in direction of the longitudinal axis X and is arranged in the proximity of the respective opposite upper surface 2a or 2b. In practice, such jutting portions 15, which have triangular cross section in this case, prevent the seeds from being able to lean on the bottom wall 2, between two consecutive adjacent openings 3. In fact, once positioned above the tray, the seeds will be arranged on the opposite upper side surfaces 2a, 2b of each opening 3, without any possibility of being able to lay outside of the "V-shaped" section formed by the upper side surfaces 2a, 2b, on any flat surface 40 of the bottom wall 2.

In particular, the cross distance D of each through opening 3, in the minimum point, is of 5 mm, but generally it must anyhow be less than 8 mm in other embodiments. Preferably, the cross distance D is less than 1 mm. It should be observed that such distance D is measured from the connecting portions 60 between the two opposite lower side surfaces 2c, 2d and the two opposite upper side surfaces 2a, 2b.

Advantageously, according to an embodiment shown in figure 3, the respective connecting portions 60 between said two opposite lower side surfaces 2c, 2d and the two opposite upper side surfaces 2a, 2b are curvilinear. This favors even more the extraction of the sprouts from the tray.

## Claims

1. Tray (1) for sprouter (100) comprising a bottom wall (2) provided with at least one through opening (3) mainly extending along a longitudinal axis (X) and having transversal dimensions (Y) such as to prevent the seeds (50) laid on said tray from going through said at least one through opening (3), wherein said at least one opening (3) is defined, at least on top and in direction of said longitudinal axis, by two opposite upper side surfaces (2a, 2b) of said bottom wall (2) which, in cross section, are substantially "V" shaped so that the seeds laid on said tray (1) can lean on said two opposite upper side surfaces (2a, 2b), wherein said at least one opening (3) is defined, at least at the bottom and in direction of said at least one longitudinal axis, by two opposite lower side surfaces (2c, 2d) of said bottom wall (2) that, in cross section, are substantially "inverted-V" shaped, said two opposite lower side surfaces (2c, 2d) being connected to said two opposite upper side surfaces (2a, 2b), **characterized in that** the respective connecting portions (60) between said two opposite lower side surfaces (2c, 2d) and said two opposite upper side surfaces (2a, 2b) are curvilinear.

2. Tray (1) according to claim 1, **characterized in that** the angle (γ) of inclination of each opposite upper side surface (2a, 2b) is between 10 and 45°, preferably 30°, with respect to a vertical plane (V).

3. Tray (1) according to claim 1 or 2, **characterized in that** the angle (β) of inclination of each opposite lower side surface (2c, 2d) is between 10 and 45°, preferably 30°, with respect to a vertical plane (V).

4. Tray (1) according to one or more claims 1 to 3, **characterized in that** the upper surface (40) of said bottom wall (2) has, at two sides (3a, 3b) of said at least one through opening (3), a jutting portion (15) extending in direction of said longitudinal axis X and is arranged in the proximity of the respective opposite upper surface (2a, 2b).

5. Tray according to one or more of the preceding claims, **characterized in that** said longitudinal axis (X) of said at least one opening (3) is curvilinear, preferably shaped at least partially circular.

6. Tray according to one or more of the preceding claims, **characterized by** being made of plastic.

7. Tray according to one or more of the preceding claims, **characterized by** being made by injection molding.

8. Tray according to one or more of the preceding claims, **characterized in that** the cross distance (D) of said at least one through opening (3), in its minimum point, is less than 8 mm, preferably less than 5 mm.

9. Sprouter comprising one or more trays (1) according to one or more of claims 1 to 8.
